# EUROPEAN PATENT SPECIFICATION

(11) **EP 3 608 184 B1**
(45) Date of publication and mention of the grant of the patent: **18.01.2023**
(21) Application number: 18188037.8
(22) Date of filing: 08.08.2018
(51) Int. Cl.: B60T 13/66, B60T 17/22

(54) **VALVE DIAGNOSTIC SYSTEM**
VENTILDIAGNOSESYSTEM
SYSTÈME DE DIAGNOSTIC DE SOUPAPE

(43) Date of publication of application: 12.02.2020
(73) Proprietor: KNORR-BREMSE Systeme für Schienenfahrzeuge GmbH, 80809 München (DE)
(72) Inventor: LIKTOR, Balázs, 1238 Budapest (HU); TÓTH, Gábor, 1238 Budapest (HU)
(74) Representative: Prüfer & Partner mbB Patentanwälte · Rechtsanwälte

(56) References cited:
- EP-A1- 1 731 396
- WO-A1-2008/085127
- WO-A1-2018/002954
- WO-A1-2018/139998
- US-A- 5 267 473
- US-A- 5 722 736
- US-A- 6 107 692
- US-A1- 2005 217 275
- US-A1- 2018 072 296
- US-B1- 6 302 495

## Description

The invention relates to a valve diagnostic and monitoring system, and more specifically to a diagnostic system of a distributor valve of a pneumatic only brake system of freight cars.

In order to provide a safely functioning and reliable brake system of pneumatic brake systems, the pipe system and valves of such a brake system need to be monitored and checked. For this purpose, the brake valve and the brake system can be put through various tests by manipulating the valves while measuring the pressure at various points, including brake pipe pressure and brakes cylinder pressure.

Modern pneumatic-only brake systems use electric valves that receive braking signals by wire or radio to control the airflow to and from the brake cylinder. For such an electric controlled brake system, US 8781671 B2 proposes an on-board brake system diagnostic and reporting system, which allows continuous monitoring. It includes pressure sensors, to measure the pressure on various points of the system, a processor to receive the measurements and to compare it against stored brake performance profiles and to prepare an event report for preselected brake statuses and it also includes a transmitter to transmit the report. As there is no electrical network to power electrical devices like sensors or communication hubs, the electric power for the single components of the system is delivered by an energy storage device. The downside of an energy supply like this is that the system does not work autonomously and that the storage device needs to be changed or at least externally charged from time to time. Therefore the effort for maintenance is increased.

Patent document WO 2018/139998 A1 discloses a mid of train (MOT) mobile unit for use with a train to bridge communication between a head of train (HOT) device and an end of train (EOT) device. Both, the MOT and the EOT are powered by an internal power source within the unit/device.

Against this background, the objective of the present invention is to propose a system which requires less effort for maintenance, respectively no external charging times of the energy storage device. This objective is solved by a valve diagnostic system according to the main claim. Advantageous embodiments of the invention are the subject matter of the subordinated claims.

A valve diagnostic system according to the present invention comprises a valve, at least one pressure sensor, a data hub and a self-contained power supply unit. The valve is, for example, a distributor valve of a pneumatic-only brake system of a train and therefore in fluid communication with a pipe system. The pressure sensor is arranged within the valve and thus it is able to detect the pressure of the pipe system. The data produced by the pressure sensor is sent to the data hub, which subsequently transmits the data to a data processing unit, where it can be further processed. The energy for the measurements of the sensor and the data hub is supplied by the power supply unit, which is configured to convert ambient energy in electrical energy. With this system set-up, there is no need for a change of an energy storage device or external charging, as the system is capable of producing its own energy. As integrated and modular design gets more and more important in terms of usability and space requirements, the above mentioned components of the system are entirely integrated within the valve itself in a preferable embodiment.

In a preferable embodiment, other sensors like accelerometers, temperature sensors and moisture sensors are also arranged within the system in addition to the pressure sensor. An accelerometer enables the detection of vibrations due to track and wheels, whereas a temperature and a moisture sensor allow conclusions about the existence and the amount of water within the pipes, which can imply a significant danger to the system as water, for example condensed water, within the pipe can lead to damages of the system.

Further, the power supply unit comprises preferably one of a photovoltaic panel, thermoelectric generator, piezoelectric generator, axle bearing generator and a small turbine. The latter can be arranged within a pipe of the pipe system or the valve itself. It is a so-called Tesla-turbine which is capable of converting the kinetic energy of a fluid stream into rotational motion on very high rates per minute. Then again, this motion can be converted into electrical energy with the help of a current generator. Especially the use of a turbine bears advantages in the given technical field, as the electric power can be obtained in place and very close to the electric consumers.

Preferably, the system comprises additionally an energy storage device, like a battery, an accumulator, a capacitor or an ultra capacitor, which is configured to store the electrical energy generated by the power supply unit. It allows to bridge the time, at which no electrical energy can be generated. This is of significant importance for the use of a power supply unit like the Tesla-turbine or a photovoltaic panel, as these power sources are not able to provide electrical energy at any time as with respect to their functions their productivity depends on external influences. For example a photovoltaic panel can only generate electrical energy, if it receives enough light, which means that electrical energy can't be generated at nighttime. With respect to the turbine, it can only convert energy, when the valve is vented and the air streams through the valve and the pipe system. Therefore, for systems with a power supply unit like the mentioned examples, it is necessary to store the generated energy in order not to be dependent on external circumstances.

In a preferable embodiment, the energy storage device is a hybrid energy storage device, which means that it consists of more than one energy storage technology. Such an embodiment has the advantage of being able to combine the advantages of different technologies.

Further, a preferable embodiment of the invention comprises a positioning system like GPS in order to be able to assign the position information to the sensor information of the system. Thus, certain events measured by the sensors can be affiliated to location specific occurrences.

Moreover, in a preferable embodiment of the invention, the data hub is configured to receive and transmit data wirelessly or by wire.

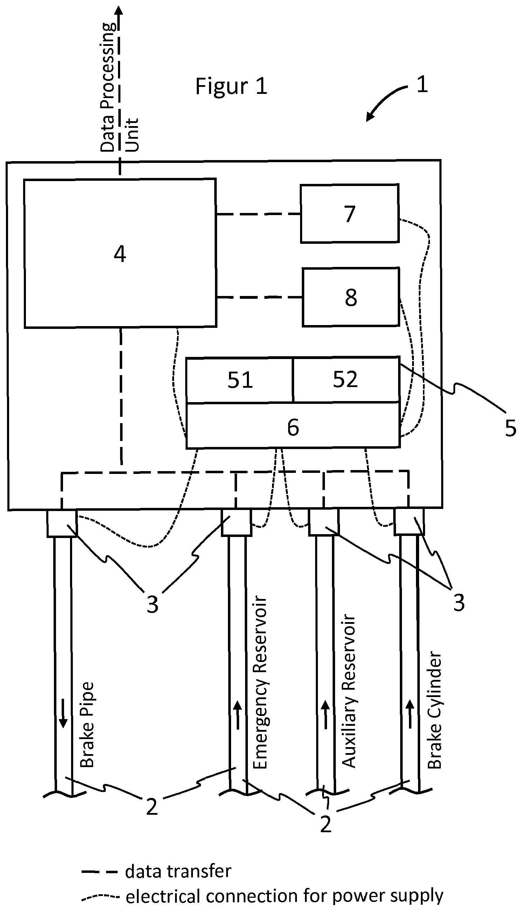

In the following, a preferable embodiment of the invention is described more in detail by reference to **figure 1****.**
- **Figure 1**: shows a schematic overview of a distributor valve system according to a preferable embodiment of the present invention

In **Fig. 1** a schematic overview of a distributor valve 1 of a pneumatic-only brake system according to a preferable embodiment of the present invention is shown. Air streams through a pipe system 2 leading to and from the distributor valve 1 in the direction that is indicated by the small arrow in each pipe. In this embodiment, pipes from the emergency reservoir, the auxiliary reservoir and the brake cylinder lead to the distributor valve 1. On the other side the brake pipe leads the air from the valve 1 to the brakes. For each pipe there is a pressure sensor 3 to measure the pressure in the corresponding pipe. Thus, the emergency reservoir pressure, the auxiliary reservoir pressure, the brake cylinder pressure and the brake pipe pressure are detected. The data detected by the sensors is sent to a data hub 4, which transfers it to a data processing unit (not shown in the figure).

In this embodiment, an accelerometer 8 and a GPS 7 are arranged within the valve 1, additionally to the pressure sensors 3. The information of the accelerometer 8 and the GPS 7 is also transferred to the hub 4.

The electric current for the pressure sensors 3, the GPS 7, the accelerometer 8 and the data hub 4 is delivered by a power supply unit 5 and an energy storage device 6, which is charged by the power supply unit 5.

In this embodiment, the power supply unit 5 consists of a tesla-turbine 51, which is in fluid communication with the distributor valve 1, in connection with a current generator 52. Any time the valve 1 is vented, the air stream passing through the valve 1 drives the turbine 51, which converts the kinetic energy of the air stream into a rotation of an output shaft of the turbine 51. Then again, the rotational movement is converted into electric current by the current generator 52 and subsequently stored in the energy storage device 6. From there, it is distributed to the electric consumers. The flow of the energy within the power supply unit is insinuated by the fine dotted lines in **Fig. 1****.**

The valve system according to the embodiment of **Fig. 1** is entirely integrated within the valve, so that the system can be placed and removed easily. The system can therefore be understood as a valve system module that is connected to the pipe system.

In other embodiments of the invention, also the control pressure and the weight signal pressure can be detected.

### LIST OF REFERENCE SIGNS

- 1: distributor valve
- 2: pipe system
- 3: pressure sensors
- 4: data hub
- 5: power supply unit
- 51: tesla turbine
- 52: current generator
- 6: energy storage device
- 7: GPS
- 8: Accelerometer

## Claims

1. Valve diagnostic system for valve diagnostics and monitoring comprising:
a valve (1), connected to a pipe system (2) and responsive to pressure in the pipe system (2),
at least one pressure sensor (3) configured to detect the pressure of at least one pipe system (2), which is in fluid communication with the valve (1),
a data hub (4), which is configured to receive data detected by the at least one pressure sensor (3) and to transmit said data to a data processing unit, and
a self-contained power supply unit (5), which is configured to convert ambient energy in electrical energy and to power the power consumers of the system whereby
the components of the system are entirely integrated within the valve (1) itself.

2. System according to the preceding claim, whereby the system comprises non-pressure sensors, preferably accelerometers (8), temperature sensors and moisture sensors.

3. System according to any of the preceding claims, whereby the self-contained power supply unit (5) comprises at least one of a photovoltaic panel, thermoelectric generator, piezoelectric generator, axle bearing generator and a turbine.

4. System according to any of the preceding claims, whereby the system comprises an energy storage device (6).

5. System according to claim 4, whereby the energy storage device (6) comprises at least one of a battery, an accumulator, a capacitor or an ultra capacitor, which is configured to store the electrical power gained by the self-contained power supply unit (5) and to power the power consumers of the system.

6. System according to claim 4, whereby the energy storage device (6) is a hybrid energy storage device comprising multiple distinct energy storage devices.

7. System according to any of the preceding claims, whereby the system comprises a positioning system, preferably GPS (7).

8. System according to any of the preceding claims, whereby the data hub (4) is configured to receive the data from the sensors (3) and transmit the data to a data processing unit by wire or wirelessly.

## Patentansprüche

1. Ventildiagnosesystem zur Ventildiagnose und -überwachung, umfassend:
ein Ventil (1), das mit einem Rohrsystem (2) verbunden ist und auf Druck in dem Rohrsystem (2) reagiert,
mindestens einen Drucksensor (3), der dafür gestaltet ist, den Druck mindestens eines Rohrsystems (2) zu erkennen, das in Fluidverbindung mit dem Ventil (1) steht,
eine Datendrehscheibe (4), die dafür gestaltet ist, Daten zu empfangen, die von dem mindestens einen Drucksensor (3) erkannt werden, und die Daten zu einer Datenverarbeitungseinheit zu übertragen, und
eine eigenständige Stromversorgungseinheit (5), die dafür gestaltet ist, Umgebungsenergie in elektrische Energie umzuwandeln und die Stromverbraucher des Systems mit Strom zu versorgen, wobei
die Komponenten des Systems vollständig in das Ventil (1) selbst integriert sind.

2. System nach dem vorhergehenden Anspruch, wobei das System Nicht-Drucksensoren umfasst, vorzugsweise Beschleunigungsmesser (8), Temperatursensoren und Feuchtigkeitssensoren.

3. System nach einem der vorhergehenden Ansprüche, wobei die eigenständige Stromversorgungseinheit (5) mindestens eines von einem Photovoltaikmodul, thermoelektrischen Generator, piezoelektrischen Generator, Achslagergenerator und einer Turbine umfasst.

4. System nach einem der vorhergehenden Ansprüche, wobei das System eine Energiespeichervorrichtung (6) umfasst.

5. System nach Anspruch 4, wobei die Energiespeichervorrichtung (6) mindestens eines von einer Batterie, einem Akkumulator, einem Kondensator oder einem Ultrakondensator umfasst, der/die dazu gestaltet ist, den elektrischen Strom zu speichern, der durch die eigenständige Stromversorgungseinheit (5) gewonnen wird, und die Stromverbraucher des Systems mit Strom zu versorgen.

6. System nach Anspruch 4, wobei die Energiespeichervorrichtung (6) eine hybride Energiespeichervorrichtung ist, die mehrere einzelne Energiespeichervorrichtungen umfasst.

7. System nach einem der vorhergehenden Ansprüche, wobei das System ein Positionsbestimmungssystem umfasst, vorzugsweise GPS (7).

8. System nach einem der vorhergehenden Ansprüche, wobei die Datendrehscheibe (4) dazu gestaltet ist, die Daten von den Sensoren (3) zu empfangen und die Daten drahtgebunden oder drahtlos zu einer Datenverarbeitungseinheit zu übertragen.

## Revendications

1. Système de diagnostic de soupape pour des diagnostics et un contrôle de soupape comprenant :
une soupape (1) reliée à un système (2) de conduit est sensible à de la pression dans le système (2) de conduit,
au moins un capteur (3) de pression configuré pour détecter la pression dans au moins un système (2) de conduit, qui est en communication fluidique avec la soupape (1),
un concentrateur (4) de données, qui est configuré pour recevoir des données détectées par le au moins un capteur (3) de pression et pour transmettre ces données à une unité de traitement de données, et
une unité (5) autonome d'alimentation en électricité, qui est configurée pour transformer de l'énergie ambiante en énergie électrique et pour alimenter les consommateurs d'électricité du système, dans lequel les constituants du système sont intégrés entièrement dans la soupape (1) elle-même.

2. Système suivant la revendication précédente, dans lequel le système comprend des capteurs autres que de la pression, de préférence des accéléromètres (8), des capteurs de température et des capteurs d'humidité.

3. Système suivant l'une quelconque des revendications précédentes, dans lequel l'unité (5) autonome d'alimentation en électricité comprend au moins l'un d'un panneau photovoltaïque, d'un générateur thermoélectrique, d'un générateur piézoélectrique, d'un générateur à palier d'essieu et d'une turbine.

4. Système suivant l'une quelconque des revendications précédentes, dans lequel le système comprend un dispositif (6) d'accumulation d'énergie.

5. Système suivant la revendication 4, dans lequel le dispositif (6) d'accumulation d'énergie comprend au moins l'un d'une batterie, d'un accumulateur, d'un condensateur et/ou d'un ultra condensateur, qui est configuré pour accumuler la puissance électrique gagnée par l'unité (5) autonome d'alimentation en électricité et pour alimenter les consommateurs d'électricité du système.

6. Système suivant la revendication 4, dans lequel le dispositif (6) d'accumulation d'énergie est un dispositif d'accumulation d'énergie hybride, comprenant de multiples dispositifs d'accumulation d'énergie distincts.

7. Système suivant l'une quelconque des revendications précédentes, dans lequel le système comprend un système de détermination de position, de préférence un GPS (7).

8. Système suivant l'une quelconque des revendications précédentes, dans lequel le concentrateur (4) de données est configuré pour recevoir les données des capteurs (3) et transmettre les données par fil ou sans fil à une unité de traitement de données.
